# FASCICULE DE BREVET EUROPEEN

(11) **EP 2 318 200 B1**
(45) Date de publication et mention de la délivrance du brevet: **25.03.2015**
(21) Numéro de dépôt: 09765800.9
(22) Date de dépôt: 12.06.2009
(51) Int. Cl.: B29C 70/86, F16C 7/00, B29C 70/22

(54) **PROCEDE DE FABRICATION D'UNE PIECE STRUCTURALE EN MATERIAU COMPOSITE A MATRICE ORGANIQUE**
VERFAHREN ZUR HERSTELLUNG EINES STRUKTURBAUTEILS AUS EINEM VERBUNDSTOFF MIT ORGANISCHER MATRIX
PROCESS FOR MANUFACTURING A STRUCTURAL PART MADE OF AN ORGANIC MATRIX COMPOSITE

(30) Priorité: 13.06.2008 FR 0803323
(43) Date de publication de la demande: 11.05.2011
(73) Titulaire: Messier-Bugatti-Dowty, 78140 Vélizy-Villacoublay (FR)
(72) Inventeur: DUNLEAVY, Patrice, F-91120 Palaiseau (FR); MASSON, Richard, F-78530 Buc (FR)
(74) Mandataire: Gevers France
(86) Numéro de dépôt international: PCT/EP2009/057291
(87) Numéro de publication internationale: WO 2009/153220

(56) Documents cités:
- EP-A- 1 798 428
- US-A- 4 469 730
- US-A- 4 519 290
- US-A- 4 704 918

## Description

La présente invention porte sur une pièce structurale en matériau composite fibreux à matrice organique pour une utilisation notamment dans le domaine aéronautique.

Dans le domaine aéronautique on a développé l'emploi de matériaux composites à renforts fibreux car ils permettent de réaliser des pièces plus légères qu'avec les matériaux métalliques et de simplifier les structures obtenues à partir de l'assemblage de ces dernières; en particulier on permet ainsi de réduire le nombre de pièces. Les pièces sont obtenues par exemple par la mise en forme par drapage de nappes de fibres préimprégnées de résine puis par la polymérisation de celles-ci ou bien par la réalisation d'une préforme de fibres sèches que l'on imprègne de résine à l'intérieur d'un moule dans lequel on a fait le vide et dans lequel on injecte la résine à faible pression.

La présente invention concerne la fabrication de pièces à partir de fibres sèches au moins en partie. Le constituant fibreux est généralement formé de fibres de faible diamètre regroupées en mèches ou torons. Les fibres sont par exemple en carbone, verre ou encore en un matériau tel que l'aramide.

Un mode de réalisation de pièces structurales, telles que des bielles comportant un corps creux ou non, comprend la formation d'une structure fibreuse par enroulement, tissage, tricotage ou tressage de mèches sèches le long d'un mandrin dont le contour général est celui de la pièce à obtenir. La structure fibreuse peut être formée d'une ou d'une pluralité de couches ou bien être de type tridimensionnel en fonction des propriétés, telle que la résistance, souhaitées. L'ensemble du mandrin et de la structure fibreuse qui le recouvre est ensuite imprégné d'une résine formant après polymérisation une matrice incorporant les éléments fibreux. Le mandrin peut être retiré ou éliminé de la préforme obtenue ou encore maintenu en place s'il est léger. La préforme obtenue est ainsi creuse ou non, éventuellement de forme axisymétrique, de révolution ou non. Elle est ensuite usinée et équipée le cas échéant de composants accessoires, pour constituer l'élément structural définitif.

Dans la mesure où la pièce est assemblée avec d'autres pièces pour former une structure, on peut prévoir une ou des extensions longitudinales de la paroi du corps de la préforme de manière à ménager des chapes formant des interfaces avec les autres éléments de la structure dans laquelle la pièce vient s'intégrer. Après polymérisation de la préforme on perce et éventuellement on détoure les extensions pour obtenir les chapes. La formation des orifices dans la chape peut être prévue aussi en début de fabrication.

La demanderesse a déjà proposé une nouvelle manière de produire une ou des chapes sur un élément structural en matériau composite. Dans la demande de brevet FR 2 893 532 on décrit un procédé de fabrication d'une chape sur un tel élément fait au moins localement d'un empilement de plis primaires de fibres composites.

La demanderesse s'est fixé comme objectif maintenant une nouvelle manière de produire une ou des chapes sur un élément structural en matériau composite réalisé par tressage d'un matériau fibreux sur un mandrin et l'imprégnation de la préforme qui en résulte par une résine organique.

On connaît par le brevet US 6 890 470 une méthode de fabrication d'un élément structural en matériau composite fibreux. On applique un matériau fibreux en forme de mèches par une opération automatique de tissage circulaire sur un double mandrin, éventuellement avec incorporation entre deux couches, de couches de renfort préalablement tissées; on enlève l'un des mandrins ; on met en forme la partie tissée libre pour former par exemple des brides, on imprègne le tout de résine selon par exemple la technique connue RTM et on élimine ensuite le second mandrin de la préforme obtenue. Selon une variante de réalisation, on incorpore des éléments de renfort textiles entre les différentes couches du tissage du côté d'une extrémité longitudinale de la préforme. Cette extrémité reste ouverte et ménage deux extensions de paroi de la préforme qui constituent des interfaces pour recevoir un organe de liaison à une autre pièce structurale. Cette solution implique la réalisation d'une chape double à partir de la paroi de la préforme.

On connaît le brevet US 4469730 qui décrit la fabrication d'une pièce structurale avec chape en matériau composite à matrice organique, comprenant la réalisation d'une structure fibreuse formant une préforme par tressage de mèches d'un matériau fibreux sur un mandrin comportant un renfort dans son prolongement axial, l'imprégnation de la préforme par une résine organique et la polymérisation de cette dernière, le renfort formant la chape comportant un alésage d'axe perpendiculaire à l'axe du mandrin pour le logement d'un organe de liaison.

On connaît le brevet US4704918 portant sur une bielle de transmission de force comprenant un mandrin longitudinal et des éléments de renfort aux extrémités. L'ensemble est recouvert d'une enveloppe textile imprégnée de résine. Des picots disposés transversalement dans les éléments de renfort assurent l'accrochage de l'enveloppe. Les éléments de renfort sont terminés par un trou fileté orienté dans l'axe de la bielle pour la fixation par vissage d'un organe de liaison.

On propose une nouvelle manière de réaliser une interface de la pièce structurale, qui améliore la tenue aux efforts à la fois de compression et de traction, efficacement dans la zone de liaison tout en étant de réalisation simple.

Conformément à l'invention, le procédé de fabrication d'une pièce structurale avec chape en matériau composite à matrice organique comprenant la réalisation d'une structure fibreuse formant une préforme par tressage de mêches d'un matériau fibreux sur un mandrin comportant un renfort dans son prolongement axial, l'imprégnation de la structure fibreuse par une résine organique, et la polymérisation de cette dernière, ledit renfort formant ladite chape comportant un alésage d'axe perpendiculaire à l'axe du mandrin pour le logement d'un organe de liaison, est caractérisé par le fait que l'on incorpore dans le renfort de part et d'autre dudit alésage des picots dont une partie est saillante, le tressage étant effectué autour des picots de manière à ce que les mêches de la structure fibreuse s'entrecroisent au moins en partie autour de ces derniers.

Pour une pièce telle qu'une bielle de train d'atterrissage, on dispose un renfort à chaque extrémité du mandrin.

Le renfort est de préférence constitué en un matériau fibreux et plus particulièrment le renfort est formé d'un matériaux fibreux imprégné de résine organique.

Selon un mode de réalisation, le renfort forme un bloc à section transversale, rectangulaire ou elliptique.

La chape est percée d'un alésage dans lequel est reçu un organe de liaison, tel qu'un axe dans une bague, avec un autre élément de la structure. Les efforts entre la bague de l'organe de liaison montée sur la chape et les fibres du tressage de la préforme sont transmis, pour la partie de la bague en contact avec le renfort, par cisaillement successivement entre le renfort de la chape et la matrice puis entre la matrice et les fibres de la structure fibreuse. Afin d'améliorer la tenue mécanique de la pièce lorsque celle-ci est soumise aux efforts de traction ou de compression, on met ainsi en place par les picots un moyen assurant la transmission des efforts directement entre l'organe de liaison et les fibres de la structure fibreuse tressée et renforçant la liaison entre la structure fibreuse tressée et la pièce de renfort.

De préférence, on dispose les picots en réseau, l'espacement entre les picots permettant le logement d'au moins une mêche et le croisement de deux mêches. La hauteur des picots est au plus égale à l'épaisseur de la structure tressée.

On incorpore les picots dans le renfort soit dans une première zone située entre le mandrin et la zone de l'alésage pour améliorer la tenue et favoriser la transmission des efforts de compression, soit dans une seconde zone située du côté de l'alésage opposé au mandrin pour améliorer la tenue et favoriser la transmission des efforts de traction, soit à la fois dans ladite première zone et ladite seconde zone.

Conformément à une autre caractéristique, les picots sont en métal ou en carbone.

On décrit maintenant l'invention plus en détail en référence aux dessins joints en annexe d'un mode de réalisation, et sur lesquels :
- La figure 1 représente schématiquement une préforme conforme à l'invention vue en coupe axiale;
- La figure 2 montre un mandrin permettant la réalisation d'une préforme conforme à l'invention ;
- La figure 3 montre le mandrin de la figure 2 sur lequel on a placé les picots conformément à un mode de réalisation de l'invention ;
- La figure 4 montre la préforme réalisée à partir du mandrin de la figure 3 ;
- La figure 5 montre la pièce obtenue, le mandrin étant éliminé;
- La figure 6 montre schématiquement une installation de tressage;
- La figure 7 montre schématiquement la disposition relative des mèches de la tresse par rapport aux picots solidaires du renfort de la chape;
- La figure 8 montre schématiquement une vue, agrandie et en coupe, de la chape dans le plan 8-8 de la figure 7;
- La figure 9 montre schématiquement une vue, agrandie et en coupe, de la chape dans le plan 9-9 de la figure 7.

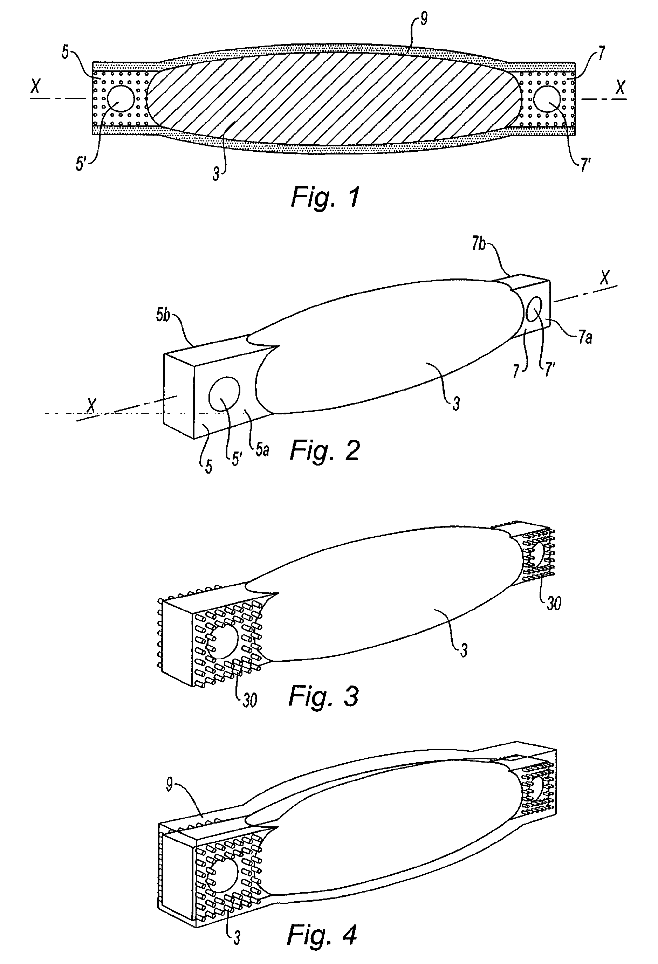

Comme on le voit sur la figure 1, une pièce structurale dans le domaine aéronautique, telle qu'une bielle d'un train d'atterrissage est formée à partir d'une préforme comprenant un mandrin 3 dont le contour approche celui de la pièce finale. Il s'agit ici d'un exemple de réalisation de l'invention. Il n'est pas limitatif. Le mandrin est cylindrique, globalement ovoïde, avec un axe principal XX, et fermé à ses extrémités en ayant une forme arrondie. Il s'agit d'un élément accessoire sur lequel la pièce est moulée. Il doit pouvoir éventuellement être éliminé sans difficulté une fois qu'il a rempli sa fonction de moulage interne de la pièce. Par exemple le matériau peut être rendu fluide et éliminé. Cependant selon les cas, s'il est suffisamment léger par exemple, il est maintenu en place. Il peut notamment être réalisé en un matériau fibreux imprégné de résine. La longueur du mandrin est celle de la pièce finale aux interfaces près.

Un renfort, 5 et 7 respectivement, est placé aux deux extrémités du mandrin 3. Ce renfort a une forme sensiblement parallélépipédique avec une face conformée de manière à venir s'adapter au contour de l'extrémité du mandrin. Il est réalisé avantageusement en une matière fibreuse. Un alésage 5' et 7' traverse le renfort perpendiculairement à l'axe principal de la pièce 1. Il sert de logement pour un organe de liaison futur avec bague ou autre, non représenté, avec une autre pièce de la structure. Les alésages peuvent être réalisés après la polymérisation de la résine.

La pièce de renfort est obtenue par exemple par la mise en forme par drapage de nappes de fibres préimprégnées de résine puis par la pré-polymérisation de celles-ci ou bien par la réalisation d'une préforme de fibres sèches que l'on imprègne de résine à l'intérieur d'un moule dans lequel on a fait le vide et dans lequel on injecte la résine à faible pression.

L'ensemble du mandrin et des renforts est revêtu d'une structure fibreuse 9 composée de mèches de fibres tressées le long du mandrin. Les fibres sont généralement en verre, carbone, bore ou encore en matériau aramide, tel que celui connu sous la marque enregistrée Kevlar ®. Le tressage est une technique connue en soi qui consiste à réaliser une structure textile, ici tubulaire, dans laquelle les fils ou les mèches la composant sont entrecroisés suivant un angle déterminé par rapport à la direction longitudinale du produit, avec des fils longitudinaux. Le tressage sur mandrin permet d'une manière générale de réaliser des profils particuliers comme des tubes, des cônes, des tuyaux coudés, etc.

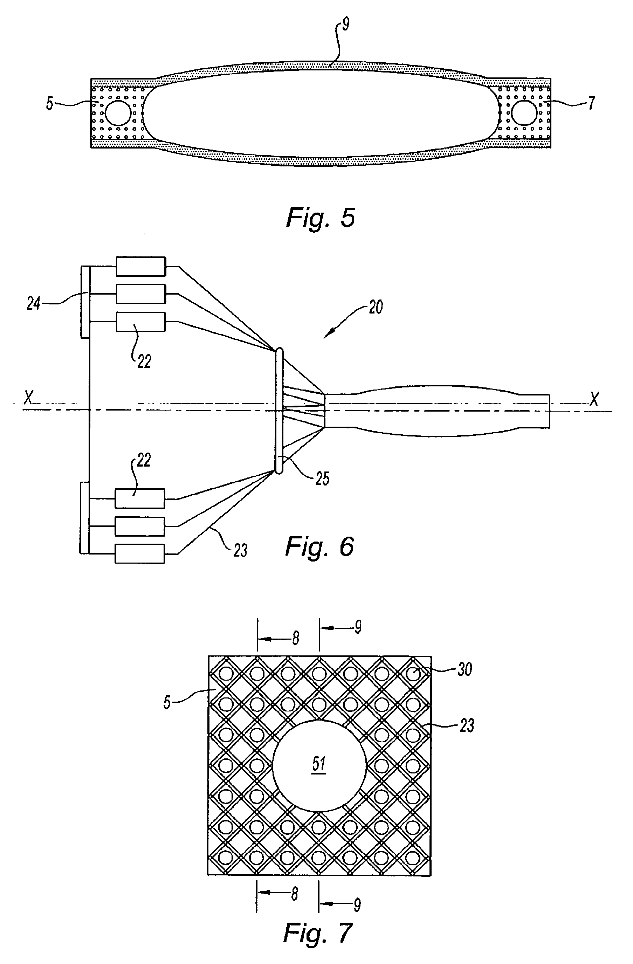

La machine 20 représentée schématiquement sur la figure 6 comprend une pluralité de bobines 22 montées sur des supports répartis annulairement sur plusieurs niveaux en un cylindre 24 coaxial avec le mandrin à recouvrir. Ce dernier est monté sur un chariot qui se déplace le long de l'axe du cylindre 24 à mesure que la tresse est formée. Les mèches 23 alimentées par les bobines sont tressées en continu de façon circulaire sur le mandrin en formant un tube. Les mèches sont maintenues en tension grâce à un anneau coaxial 25.

Le tressage est selon un mode de réalisation, tridimensionnel aussi bien axialement que radialement, les mèches étant entrelacées de façon à ne pas distinguer les couches. Le processus du tressage est réalisé par un changement relatif de la position des porteurs de mèches entre eux. L'angle des mèches est choisi dans l'intervalle 20° et 80°. Selon un autre mode de réalisation le tressage est monocouche avec empilement éventuel de plusieurs couches.

On a représenté sur la figure 2, vue en perspective, le mandrin 3 assemblé avec les deux renforts 5 et 7. On distingue la forme parallélépipédique des renforts avec deux faces principales opposées, 5a, 5b et 7a, 7b respectivement, parallèles à l'axe XX de la préforme. La largeur de ces faces est inférieure au plus grand diamètre du mandrin 3 et elle est percée d'un alésage, 5' respectivement 7', destiné à recevoir un organe de liaison de la pièce. L'épaisseur du renfort est inférieure à la largeur des faces principales.

Conformément à l'invention, on dispose des picots 30 sur les faces principales 5a, 5b et 7a, 7b des renforts, comme on le voit sur la figure 3. Ces picots, en carbone ou bien métalliques, ont un diamètre, par exemple, de 1 à 3 mm et sont fixés dans la masse du renfort de manière à constituer des points d'ancrage. Ils sont répartis en réseau autour des alésages 5' et 7', avec un pas dans la direction parallèle à l'axe XX et un pas dans la direction transversale par rapport à cet axe avec par exemple une densité de 1 à 3 picots par cm². Dans l'exemple représenté on a disposé les picots uniformément. La hauteur des picots est au plus égale à l'épaisseur de la structure fibreuse à venir.

Les picots 30 sont disposés dans le renfort soit dans une première zone située entre le mandrin 3 et la zone de l'alésage 5', 7' soit dans une seconde zone située de l'autre côté de l'alésage 5', 7 opposé au mandrin 3, soit à la fois dans ladite première zone et ladite seconde zone.

De cette manière on renforce la liaison entre le renfort et la structure fibreuse 9 lorsque la bielle est susceptible de travailler soit en compression, soit en traction soit en compression et en traction.

Selon un mode de réalisation avantageux, les picots sont formés de tiges qui traversent le renfort et dépassent des deux côtés. Dans ce cas le renfort est de préférence fibreux. On assure ainsi un accrochage efficace des fibres du tressage.

Lorsque l'ensemble du mandrin et des renforts est ainsi apprêté, on procède au tressage des mèches autour de celui-ci en le disposant dans une machine du type de celle présentée ci-dessus. Le tressage commence à une extrémité de l'ensemble et s'achève en aval de l'autre extrémité, voir la figure 4. Le tressage est conventionnel à l'exception de la zone des renforts. Dans cette zone on assure le tressage des mèches de manière à ce qu'elles s'entrecroisent autour des picots 30. Une mèche peut aussi être divisée et venir se placer de part et d'autre d'un picot. Sur la figure 7 on a représenté un exemple de disposition des mèches 23 dans la zone des renforts 5 et 7. Les mèches forment un croisillon autour des picots 30. Un objectif est d'assurer un ancrage mécanique du tressé sur les renforts 5 et 7. Grâce à cette disposition, les efforts axiaux sont transmis de l'organe de liaison logé dans l'alésage partiellement directement de l'organe de liaison au tressé et partiellement de l'organe de liaison au renfort puis du renfort au tressé par les picots en même temps que par cisaillement de la matrice.

En fonction de la position des picots sur le renfort d'un côté ou de l'autre de l'alésage par rapport au corps de la bielle, on peut privilégier de renforcer la liaison entre le renfort et la structure composite tressée 9 lorsque la bielle est susceptible de travailler soit en compression, soit en traction soit à la fois en compression et en traction.

Il est à noter que les efforts entre le renfort et la structure composite fibreuse sont transmis essentiellement par la matrice formant l'interface entre le renfort et la structure. Les picots travaillent en cisaillement mais leur fonction est majoritairement d'éviter l'écartement entre les deux parois en contact ; ils travaillent principalement en traction / compression et renforcent la résistance au délaminage.

Sur la figure 7, le renfort 5 est percé au préalable de l'orifice 5' et les picots sont alors disposés à une distance minimale de l'orifice pour permettre le tressage convenable autour des picots. La solution de percer les orifices après tressage et polymérisation de la chape est cependant aussi envisageable.

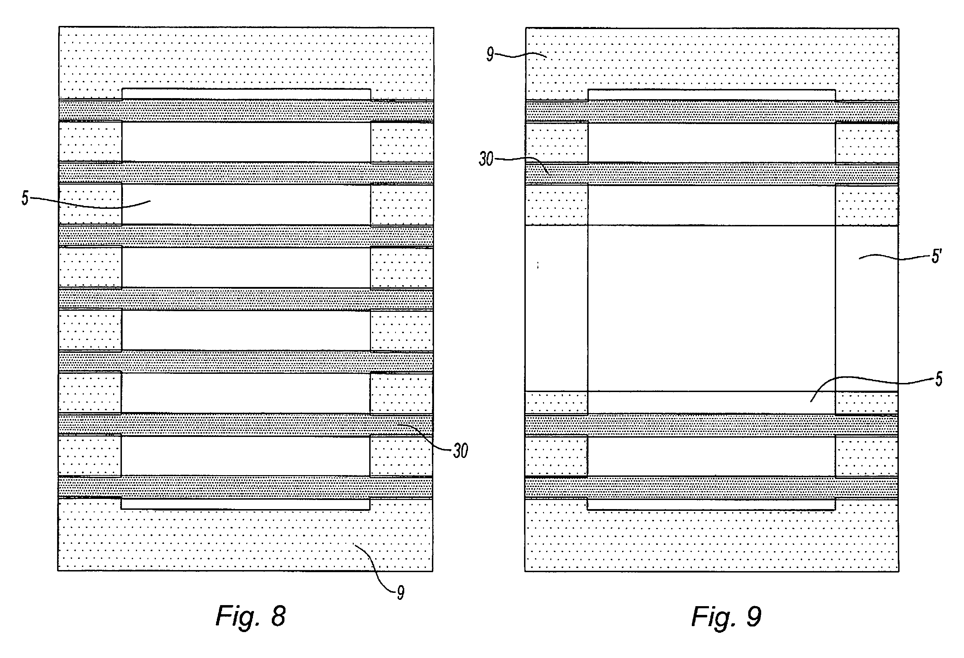

On a représenté sur les figures 8 et 9, la vue en coupe de l'un des deux renforts formant les chapes après tressage de la structure fibreuse, dans le cas où les picots 30 sont traversants. Le renfort 5 par exemple est traversé ici par sept picots 30 disposés perpendiculairement à l'axe XX et aux faces principales. Le tressage de la structure fibreuse 9 a été effectué autour des deux extrémités des picots 30. Sur la figure 9 plus particulièrement on voit la disposition des picots de part et d'autre de l'orifice 5'.

Lorsque le tressage est terminé, on procède à l'imprégnation de la préforme. On met en oeuvre une technique d'imprégnation telle que la technique RTM qui est l'acronyme de « Resin Transfer Molding ». Selon cette technique, en soi connue, on place la préforme dans la cavité d'un moule adapté à la forme de la pièce à réaliser. Le moule est mis sous vide et une résine de faible viscosité est injectée à l'intérieur du moule. On procède ensuite à la polymérisation de la résine formant la matrice en portant l'ensemble à la température de polymérisation. Il est à noter qu'avec cette étape on achève la polymérisation le cas échéant du matériau constituant le renfort.

Selon la nature du mandrin 3, celui-ci peut être éliminé lors de l'étape de polymérisation ou bien après celle-ci ou encore être conservé. On obtient au final une pièce représentée en coupe axiale sur la figure 5 avec une paroi 9 constituée d'un tressé dans une matrice. Aux extrémités, cette pièce comprend une chape incorporant un renfort. Une bague métallique s'étendant d'une face à l'autre est montée dans l'alésage de la chape.

Un mode de fabrication avantageux mais non limitatif, comprend les étapes suivantes

Réalisation d'un mandrin en matériau fibreux préimprégné de résine organique.

Réalisation, séparément, du ou des renforts également en matériau fibreux préimprégné de résine organique.

Insertion des picots dans le renfort ou les renforts éventuellement par vibration, en mettant en oeuvre par exemple une technique dite de « z-pinning ».

Assemblage et collage du mandrin et du ou des renforts.

Pré-polymérisation de l'ensemble préimprégné de manière à ce qu'il puisse être manipulé et tressé sans déformation.

Tressage de la structure fibreuse formant la préforme autour du mandrin avec le ou les renforts.

Injection de résine dans la préforme suivie de la polymérisation complète de la pièce, par cocuisson.

Usinage des interfaces et intégration des bagues de l'organe de liaison.

## Revendications

1. Procédé de fabrication d'une pièce structurale avec chape en matériau composite à matrice organique comprenant la réalisation d'une structure fibreuse (9) formant une préforme par tressage de mêches d'un matériau fibreux sur un mandrin (3) comportant un renfort (5, 7) dans son prolongement axial (XX), l'imprégnation de la préforme par une résine organique, et la polymérisation de cette dernière, ledit renfort formant ladite chape comportant un alésage (5', 7') d'axe perpendiculaire à l'axe (XX) pour le logement d'un organe de liaison, **caractérisé par le fait que** l'on incorpore dans le renfort (5, 7) de part et d'autre dudit alésage (5', 7') des picots (30) dont une partie est saillante, le tressage étant effectué autour des picots de manière à ce que les mêches s'entrecroisent au moins en partie autour de ces derniers.

2. Procédé selon la revendication 1 selon lequel on dispose un renfort (5, 7) à chaque extrémité du mandrin (3).

3. Procédé selon l'une des revendications précédentes selon lequel le renfort est fibreux.

4. Procédé selon la revendication précédente selon lequel le renfort est formé d'un matériau fibreux imprégné de résine.

5. Procédé selon la revendication précédente selon lequel le mandrin étant formé d'un matériau fibreux imprégné de résine, la résine du mandrin et du renfort est pré-polymérisée avant tressage de la structure fibreuse et l'ensemble subit un polymérisation complète après injection de la résine dans la structure fibreuse.

6. Procédé selon l'une des revendications précédentes selon lequel le renfort est à section transversale rectangulaire.

7. Procédé selon l'une des revendications précédentes selon lequel on incorpore les picots (30) dans le renfort dans une première zone située entre le mandrin (3) et la zone de l'alésage (5', 7'), et dans une seconde zone située de l'autre côté de l'alésage par rapport au mandrin..

8. Procédé selon l'une des revendications précédentes, selon lequel on dispose les picots (30) en réseau, l'espacement entre les picots permettant le logement d'au moins une mêche (23) et le croisement de deux mêches (23).

9. Procédé selon l'une des revendications précédentes, selon lequel la hauteur des picots (23) est au plus égale à l'épaisseur du tressage.

10. Procédé selon l'une des revendications précédentes selon lequel les picots sont en métal ou en carbone.

## Patentansprüche

1. Verfahren zur Herstellung eines Strukturteils mit Gabelkopf aus Verbundwerkstoff mit organischer Matrix, welches die Herstellung einer eine Vorform bildenden Faserstruktur (9) durch Flechten von Bündeln eines Fasermaterials auf einen Dorn (3), der in seiner axialen Verlängerung (XX) eine Verstärkung (5, 7) aufweist, die Tränkung der Vorform mit einem organischen Harz und die Polymerisation dieses Letzteren umfasst, wobei die den Gabelkopf bildende Verstärkung eine Bohrung (5', 7') mit einer zu der Achse (XX) senkrechten Achse für die Aufnahme eines Verbindungselements aufweist, **dadurch gekennzeichnet, dass** in die Verstärkung (5, 7) beiderseits der Bohrung (5', 7') Stifte (30) integriert werden, von denen jeweils ein Teil vorstehend ist, wobei das Flechten um die Stifte herum erfolgt, derart, dass sich die Bündel um diese Letzteren herum wenigstens teilweise miteinander verflechten.

2. Verfahren nach Anspruch 1, wobei eine Verstärkung (5, 7) an jedem Ende des Dorns (3) angeordnet wird.

3. Verfahren nach einem der vorhergehenden Ansprüche, wobei die Verstärkung faserig ist.

4. Verfahren nach dem vorhergehenden Anspruch, wobei die Verstärkung aus einem mit Harz getränkten Fasermaterial gebildet wird.

5. Verfahren nach dem vorhergehenden Anspruch, wobei der Dorn aus einem mit Harz getränkten Fasermaterial gebildet wird, das Harz des Dorns und der Verstärkung vor dem Flechten der Faserstruktur vorpolymerisiert wird und das Ganze nach Einspritzung des Harzes in die Faserstruktur einer vollständigen Polymerisation unterzogen wird.

6. Verfahren nach einem der vorhergehenden Ansprüche, wobei die Verstärkung einen rechteckigen Querschnitt aufweist.

7. Verfahren nach einem der vorhergehenden Ansprüche, wobei die Stifte (30) in einem ersten Bereich, der sich zwischen dem Dorn (3) und dem Bereich der Bohrung (5', 7') befindet, und in einem zweiten Bereich, der sich, auf den Dorn bezogen, auf der anderen Seite der Bohrung befindet, in die Verstärkung integriert werden.

8. Verfahren nach einem der vorhergehenden Ansprüche, wobei die Stifte (30) rasterförmig angeordnet werden, wobei der Abstand zwischen den Stiften die Aufnahme mindestens eines Bündels (23) und das Verflechten von zwei Bündeln (23) ermöglicht.

9. Verfahren nach einem der vorhergehenden Ansprüche, wobei die Höhe der Stifte (23) höchstens gleich der Dicke des Geflechts ist.

10. Verfahren nach einem der vorhergehenden Ansprüche, wobei die Stifte aus Metall oder aus Kohlenstoff hergestellt sind.

## Claims

1. A process of manufacturing a structural component with an end fitting made from an organic matrix composite involving the production of a fiber structure (9) that forms a preform by braiding rovings of a fibrous material onto a mandrel (3) comprising a reinforcement (5, 7) in its axial (XX) extension, impregnating the preform with an organic resin, and curing the latter, said reinforcement forming said end fitting comprising a bore (5', 7') the axis of which is perpendicular to the axis (XX) to house a connecting member, **characterized in that** incorporated into the reinforcement (5, 7) over at least part of the surface thereof that lies on each side of said bore (5', 7') are pins (30) part of which projects, braiding being performed around the pins such that the rovings crisscross one another at least partially around these pins.

2. The process as claimed in claim 1, in which a reinforcement (5, 7) is positioned at each end of the mandrel (3).

3. The process as claimed in claim 1, in which the reinforcement is a fibrous reinforcement.

4. The process as claimed in claim 3, in which the reinforcement is formed of a resin impregnated fibrous material.

5. The process as claimed in claim 4, in which, with the mandrel formed of a resin impregnated fibrous material, the resin of the mandrel and of the reinforcement is precured before the fibrous structure is braided and the assembly undergoes full curing once resin has been injected into the fibrous structure.

6. The process as claimed in claim 1, in which the reinforcement has a rectangular cross section.

7. The process as claimed in claim 1, in which the pins (30) are incorporated into the reinforcement in a first region situated between the mandrel (3) and the region of the bore (5', 7'), and in a second region situated on the other side of the bore in relation to the mandrel.

8. The process as claimed in claim 1, in which the pins (30) are arranged in a grid pattern, the spacing between the pins allowing at least one roving (23) and the crossing of two rovings (23) to be accommodated therein.

9. The process as claimed in claim 1, in which the height of the pins (23) is at most equal to the height of the braiding.

10. The process as claimed in claim 1, in which the pins are made of metal or of carbon.
